# EUROPÄISCHE PATENTANMELDUNG

(11) **EP 3 354 176 A1**
(43) Veröffentlichungstag der Anmeldung: **01.08.2018**
(21) Anmeldenummer: 17153703.8
(22) Anmeldetag: 30.01.2017
(51) Int. Cl.: A47J 43/07

(54) **VERFAHREN ZUM ZUBEREITEN EINES ZUBEREITUNGSGUTES MITTELS EINER ELEKTRISCH BETRIEBENEN KÜCHENMASCHINE**

(71) Anmelder: Vorwerk & Co. Interholding GmbH, 42275 Wuppertal (DE)
(72) Erfinder: Sickert, Michael, 58256 Ennepetal (DE)
(74) Vertreter: Müller, Enno

(57) **Zusammenfassung**

Die Erfindung betrifft ein Verfahren zum Zubereiten eines Zubereitungsgutes (2) mittels einer elektrisch betriebenen Küchenmaschine (1), wobei ein Nutzer der Küchenmaschine (1) ein Zubereitungsgut (2) in ein Zubereitungsgefäß (3) der Küchenmaschine (1) einbringt und Zubereitungsanweisungen über ein Touchscreen (4) an eine Steuereinrichtung der Küchenmaschine (1) übermittelt, und wobei die Küchenmaschine (1) in Abhängigkeit von den Zubereitungsanweisungen automatisch einen Zubereitungsschritt und/oder eine Einstellung von Zubereitungsparametern für die Zubereitung des Zubereitungsgutes (2) durchführt. Um die Zubereitung eines Zubereitungsgutes (2) noch komfortabler zu gestalten, wird vorgeschlagen, dass der Nutzer das Zubereitungsgut (2) vor dem Einbringen in das Zubereitungsgefäß (3) mittels eines Haltemittels (5) so vor das Touchscreen (4) hält, dass das Haltemittel (5) zumindest einen Teilbereich des Touchscreens (4) berührt, wobei eine Dimension des gehaltenen Zubereitungsgutes (2) anhand der Position des berührten Teilbereiches auf dem Touchscreen (4) ermittelt wird.

## Beschreibung

### Gebiet der Technik

Die Erfindung betrifft ein Verfahren zum Zubereiten eines Zubereitungsgutes mittels einer elektrisch betriebenen Küchenmaschine, wobei ein Nutzer der Küchenmaschine ein Zubereitungsgut in ein Zubereitungsgefäß der Küchenmaschine einbringt und Zubereitungsanweisungen über ein Touchscreen an eine Steuereinrichtung der Küchenmaschine übermittelt, und wobei die Küchenmaschine in Abhängigkeit von dem Zubereitungsanweisungen automatisch einen Zubereitungsschritt und/ oder eine Einstellung von Zubereitungsparametern für die Zubereitung des Zubereitungsgutes durchführt.

### Stand der Technik

Elektrisch betriebene Küchenmaschinen, mit deren Hilfe Zubereitungsgüter zubereitet werden können, sind beispielsweise als Standgeräte mit einem Zubereitungsgefäß ausgebildet, wobei innerhalb des Zubereitungsgefäßes ein Rührwerk zum Zerkleinern und Rühren des Zubereitungsgutes angeordnet ist und dem Zubereitungsgefäß des Weiteren eine Heizeinrichtung für das Zubereitungsgut zugeordnet ist. Küchenmaschinen dieser Art dienen dafür, insbesondere eine selbsttätige, automatische Abarbeitung von Zubereitungsschritten eines Rezeptes mit bevorzugt einer Mehrzahl von Zubereitungsschritten und/oder Zubereitungsparametern durchzuführen, wobei programmgesteuert beispielsweise Zubereitungsparameter wie eine Temperatur, eine Rührwerks-drehzahl, eine Zubereitungszeit und dergleichen eingestellt werden.

Die Druckschrift WO 2011/069833 A1 offenbart beispielsweise eine Küchenmaschine mit einem Rührgefäß und einem in dem Rührgefäß befindlichen Rührwerk, wobei die Küchenmaschine ein Touchscreen zum Empfangen von Zubereitungsanweisungen von einem Nutzer aufweist. Des Weiteren ist der Küchenmaschine ein im Datenaustausch mit der Küchenmaschine befindliches zusätzliches Gerät zugeordnet, welches einer Fernsteuerung der Küchenmaschine dient. Dieses Zusatzgerät verfügt ebenfalls über ein Touchscreen, an welchem ein Nutzer eine Eingabe vornehmen kann.

### Zusammenfassung der Erfindung

Ausgehend von dem vorgenannten Stand der Technik ist es Aufgabe der Erfindung, ein Verfahren zum Zubereiten eines Zubereitungsgutes mittels einer Küchenmaschine so fortzubilden, dass ein zusätzlicher Komfort für den Nutzer geschaffen wird und insbesondere das Gelingen der Zubereitung stets weiter optimiert wird.

Zur Lösung der vorgenannten Aufgabe schlägt die Erfindung vor, dass der Nutzer das Zubereitungsgut vor dem Einbringen in das Zubereitungsgefäß mittels eines Haltemittels so vor das Touchscreen hält, dass das Haltemittel zumindest einen Teilbereich des Touchscreens berührt, wobei eine Dimension des gehaltenen Zubereitungsgutes anhand der Position des berührten Teilbereiches auf dem Touchscreen ermittelt wird.

Durch diese Ausgestaltung kann eine Größe des Zubereitungsgutes ermittelt werden und ein Zubereitungsschritt bzw. ein Zubereitungsparameter in Abhängigkeit davon eingestellt bzw. angepasst werden. Somit wird bei der Zubereitung beispielsweise nicht nur die Art und das Gewicht des Zubereitungsgutes berücksichtigt, sondern auch die Größe und/oder körperliche Gestalt des Zubereitungsgutes. Dabei wird dem Umstand Rechnung getragen, dass ein Zubereitungsschritt länger dauert, wenn beispielsweise anstatt eines dünnen, länglichen Zubereitungsgutes ein gleichartiges im Wesentlichen kugelförmiges Zubereitungsgut mit gleichem Volumen zubereitet wird. Anhand der ermittelten Dimension kann wiederum auf die äußere Gestalt des Zubereitungsgutes geschlossen werden, wobei zur Ermittlung kein separates Messgerät erforderlich ist, sondern vielmehr ein ohnehin schon vorhandenes Touchscreen, mit welchem der Nutzer die Küchenmaschine bedient, genutzt werden kann. In Abhängigkeit von der Dimension kann so beispielsweise mit zunehmender Größe des Zubereitungsgutes auch eine Garzeit verlängert werden, um eine Kerntemperatur des Zubereitungsgutes über einem benötigten Schwellwert für das Gelingen der Zubereitung zu halten. Die zu ermittelnde Dimension des Zubereitungsgutes kann beispielsweise eine Länge und/oder eine Dicke und/oder eine Bereite des Zubereitungsgutes sein, wobei ggf. mehrere Dimensionen nacheinander ermittelt werden. Das Anhalten des Zubereitungsgutes an das Touchscreen erfolgt mittels eines Haltemittels, welches einerseits das Zubereitungsgut hält und andererseits zumindest einen Teilbereich des Touchscreens berührt. In einem besonders einfachen Fall weisen das Gehäuse der Küchenmaschine und/oder das Touchscreen eine Markierung auf, welche zum Anlegen und/oder Anhalten eines Teilbereiches des Haltemittels oder Zubereitungsgutes dient, sodass der Nutzer beispielsweise einerseits einen Teilbereich des Haltemittels oder Zubereitungsgutes an der Markierung anlegt bzw. anhält, und andererseits das Haltemittel bezogen auf einen gegenüberliegenden Endbereich des Zubereitungsgutes gegen das Touchscreen drückt. Dabei wird zumindest ein Bereich des Touchscreens berührt, wobei der Abstand zwischen der Markierung und dem Berührungsbereich die Dimension des Zubereitungsgutes angibt. Der Verfahrensschritt "Dimension ermitteln" kann, vorzugsweise eingebunden in eine Rezeptabfolge, entweder automatisch durch die Küchenmaschine oder durch eine manuelle Anforderung eines Nutzers gestartet werden.

Es wird vorgeschlagen, dass anhand der ermittelten Dimension ein Volumen des Zubereitungsgutes ermittelt wird. Zur Bestimmung des Volumens können beispielsweise zwei Dimensionen des Zubereitungsgutes gemessen werden. Diese beiden Dimensionen können beispielsweise eine Länge und ein Durchmesser des Zubereitungsgutes sein. Des Weiteren kann auch eine Vielzahl weiterer Dimensionen gemessen werden, um die Form des Zubereitungsgutes und damit auch das Volumen des Zubereitungsgutes möglichst genau zu bestimmen. Falls es sich bei dem Zubereitungsgut beispielsweise um ein solches mit einer stets wiederkehrenden Formgebung handelt, beispielsweise ein Ei, kann anhand nur einer Dimension, beispielsweise der Höhe des Eies, gleichzeitig auch auf dessen Durchmesser und/ oder Volumen geschlossen werden. Abhängig von dem ermittelten Volumen kann dann wiederum ein Zubereitungsparameter, wie beispielsweise eine Garzeit, für die optimale Zubereitung des Zubereitungsgutes eingestellt werden.

Insbesondere wird vorgeschlagen, dass die ermittelte Dimension mit in einer Datenbank gespeicherten Daten für verschiedene Zubereitungsgüter verglichen wird und ein für die Dimension des Zubereitungsgutes hinterlegter Zubereitungsparameter der Küchenmaschine eingestellt wird. Die Datenbank weist für unterschiedlich dimensionierte Zubereitungsgüter Referenzdaten auf, welche mit bestimmten Zubereitungsparametern verknüpft sind, die bei der Zubereitung des Zubereitungsgutes empfohlen werden. Beispielsweise kann eine für die Zubereitung von Eiern vorgesehene Tabelle Zeilen für unterschiedliche Längen und/oder Volumina des Eies aufweisen, und Spalten für eine optimale Zubereitungszeit. Nachdem der Nutzer das Zubereitungsgut in das Zubereitungsgefäß eingebracht hat, kann die Küchenmaschine den vorgeschlagenen Zubereitungsparameter entweder automatisch einstellen und den nächsten Zubereitungsschritt starten, oder zunächst den Nutzer der Küchenmaschine um Bestätigung des Zubereitungsparameters und/oder ggf. Abänderung bitten.

Ein Zubereitungsparameter kann beispielsweise eine Zubereitungszeit und/oder eine Zubereitungstemperatur sein. Darüber hinaus können als Parameter des Zubereitungsverfahrens jedoch auch beispielsweise eine in das Zubereitungsgefäß einzugebende Flüssigkeitsmenge, die Art einer Flüssigkeit, beispielsweise Wasser oder Milch, und dergleichen eingestellt werden.

Es wird vorgeschlagen, dass der Nutzer das Zubereitungsgut mittels seiner Hand vor das Touchscreen hält, wobei das Touchscreen während der Ermittlung der Dimension des Zubereitungsgutes von mindestens einem Finger, bevorzugt von zwei oder drei Fingern, des Nutzers berührt wird. Dafür nimmt der Nutzer das Zubereitungsgut in seine Hand, und zwar so, dass dieses an gegenüberliegenden Endbereichen zwischen beispielsweise zwei oder mehr Fingern gehalten ist. Die das Zubereitungsgut haltenden Fingerspitzen (jedoch vorzugsweise nicht das Zubereitungsgut selbst) berühren dabei das Touchscreen, sodass von dem Abstand zwischen den berührten Teilbereichen des Touchscreens auf die Dimension des zwischen den Fingern gehaltenen Zubereitungsgutes geschlossen werden kann.

Es kann alternativ und/oder zusätzlich vorgesehen sein, dass die Küchenmaschine selbst eine Anlagefläche im Sinne eines Haltemittels für das Zubereitungsgut bereitstellt, sodass Zubereitungsgut mit nur einem Finger gehalten werden kann, nämlich zwischen der Anlagefläche und dem Finger des Nutzers. Dann entspricht der Abstand zwischen der Anlagefläche und dem Berührungsbereich des Fingers auf dem Touchscreen einer Dimension des Zubereitungsgutes.

Da viele Zubereitungsgüter, wie beispielsweise Eier, keine ebene Umfangsfläche aufweisen, empfiehlt es sich, dass der Nutzer den jeweiligen, das Zubereitungsgut haltenden Finger im Wesentlichen parallel zu einer Flächennormale des Touchscreens ausrichtet und gegen das Touchscreen drückt. Der Nutzer verwendet die Finger seiner Hand somit nach der Art einer Schieblehre zur Messung einer Dimension eines zwischen den Fingern und/ oder zwischen einem Finger und einer Anlagefläche der Küchenmaschine gehaltenen Zubereitungsgutes. Dazu hält der Nutzer das Zubereitungsgut beispielsweise an zumindest zwei gegenüberliegenden Umfangsbereichen des Zubereitungsgutes. Bezogen auf ein Ei, sind die Finger dabei beispielsweise senkrecht zu dem Touchscreen und senkrecht zu einer Rotationsachse des Eies ausgerichtet, sodass beispielsweise eine tatsächliche Höhe des Eies ermittelt werden kann. Dadurch kann beispielsweise eine Länge, eine Breite, ein Durchmesser oder eine weitere Dimension des Zubereitungsgutes ermittelt werden. Des Weiteren kann der Nutzer das Zubereitungsgut an dessen Umfangsfläche auch mittels einer größeren Anzahl von Fingern halten, so dass die Fingerspitzen zumindest grob eine Querschnittsform des Zubereitungsgutes auf dem Touchscreen markieren. Dadurch kann wiederum mit größerer Genauigkeit beispielsweise auf die Art des Zubereitungsgutes und/oder das Volumen des Zubereitungsgutes geschlossen werden kann.

Alternativ zu dem zuvor beschriebenen Halten des Zubereitungsgutes mit der bloßen Hand des Nutzers kann auch vorgesehen sein, dass das Zubereitungsgut mittels einer handgeführten Halteeinrichtung gehalten wird, wobei ein eine Dimension des Zubereitungsgutes anzeigender Haltebereich der Halteeinrichtung parallel zu einer Flächennormale des Touchscreens ausgerichtet und gegen das Touchscreen gedrückt wird. Bei dieser Ausgestaltung kann anhand einer auf dem Touchscreen detektierten Positionierung der Haltebereiche auf eine Dimension des Zubereitungsgutes geschlossen werden kann. Die Haltebereiche erfüllen somit zwei verschiedene Funktionen, nämlich zum einen die Halterung des Zubereitungsgutes und zum anderen die Betätigung des Touchscreens. Der Nutzer orientiert die Haltebereiche der Halteeinrichtung so, dass diese im Wesentlichen senkrecht an dem Touchscreen anliegen, so dass die jeweilige zu ermittelnde Dimension des Zubereitungsgutes im besten Fall 1:1 auf die Ebene des Touchscreens projiziert wird. Die Halteeinrichtung kann als Zubehörteil zu der Küchenmaschine vorgesehen sein, insbesondere reversibel mit dieser verbindbar sein.

Des Weiteren wird vorgeschlagen, dass die Ermittlung der Dimension des Zubereitungsgutes an einem Touchscreen der Küchenmaschine oder an einem Touchscreen eines in Kommunikationsverbindung mit der Küchenmaschine stehenden Mobilgerätes erfolgt. Der Nutzer kann das Zubereitungsgut somit entweder an dem eigenen Touchscreen der Küchenmaschine, oder an einem Touchscreen eines externen Gerätes vermessen. Das externe Gerät ist beispielsweise über Bluetooth oder eine WLAN-Verbindung mit der Küchenmaschine verbunden. Das externe Gerät kann beispielsweise ein Laptop oder ein Tablet-Computer sein, welcher besonders bevorzugt ein größeres Touchscreen aufweist als die Küchenmaschine selbst. Somit können auch Zubereitungsgüter vermessen werden, die größer sind als das Touchscreen der Küchenmaschine selbst.

Schließlich wird neben dem zuvor beschriebenen Verfahren auch eine elektrisch betriebene Küchenmaschine, insbesondere ein Kochmixgerät, vorgeschlagen, welches ein Zubereitungsgefäß zur Aufnahme von Zubereitungsgut und ein Touchscreen aufweist, wobei die erfindungsgemäße Küchenmaschine zur Durchführung eines zuvor beschriebenen Verfahrens ausgebildet ist.

Des Weiteren können die Küchenmaschine und ein externes Gerät ein System bilden, welches beispielsweise so genutzt werden kann, dass ein Nutzer des Systems eine Dimension eines Zubereitungsgutes über das Touchscreen des externen Gerätes ermittelt und daraufhin ein Zubereitungsparameter der Küchenmaschine eingestellt wird.

### Kurze Beschreibung der Zeichnungen

Im Folgenden wird die Erfindung anhand von Ausführungsbeispielen näher erläutert. Es zeigen:
- Fig. 1: eine erfindungsgemäße Küchenmaschine in einer perspektivischen Ansicht von außen,
- Fig. 2: die Küchenmaschine während einer Ermittlung einer Dimension eines Zubereitungsgutes bei manueller Betätigung eines Touchscreens der Küchenmaschine,
- Fig. 3: die Küchenmaschine während einer Ermittlung einer Dimension eines Zubereitungsgutes bei Betätigung des Touchscreens durch eine handgeführte Halteeinrichtung.

### Beschreibung der Ausführungsformen

Dargestellt und beschrieben ist eine Küchenmaschine 1, welche hier als kombiniertes Kochmixgerät ausgebildet ist. Die Küchenmaschine 1 weist ein Zubereitungsgefäß 3 auf, mit einem am Boden des Zubereitungsgefäßes 3 angeordneten, in den Darstellungen nicht sichtbaren Rührwerk. Weiter ist das Zubereitungsgefäß 3 aufheizbar, beispielsweise durch eine bodenseitig an dem Zubereitungsgefäß 3 vorgesehene elektrische Widerstandsheizung.

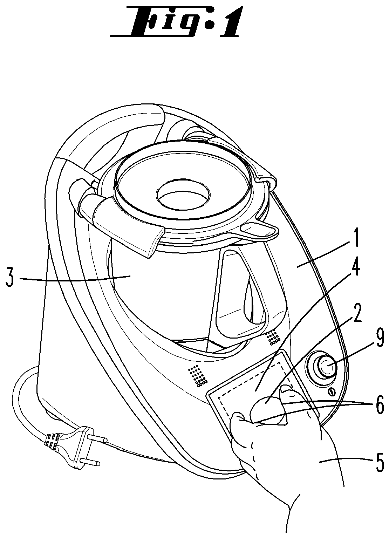

Auf der in Fig. 1 sichtbaren Bedienseite der Küchenmaschine 1 ist ein Touchscreen 4 vorgesehen, des Weiteren ein Drehschalter 9 zum Ein- und Ausschalten der Küchenmaschine 1 und zur Einstellung einer Rührwerksgeschwindigkeit und dergleichen. Zudem können auf dem Touchscreen 4 Bedientasten dargestellt werden. Das Touchscreen 4 ist ein multitouchfähiger Touchscreen 4, welcher mehrere Berührungen gleichzeitig detektieren kann. Das Touchscreen 4 kann darüber hinaus entweder durch eine Hand des Nutzers betätigt werden oder durch ein Betätigungsmittel wie beispielsweise einen Stift oder dergleichen.

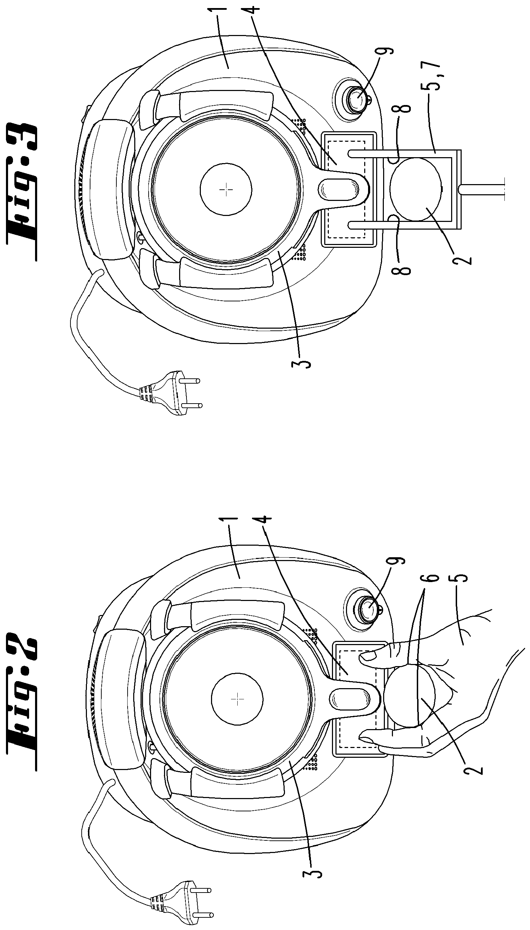

Fig. 2 zeigt die Küchenmaschine 1 während des Ermittelns einer Dimension eines Zubereitungsgutes 2, hier der Ermittlung einer Höhe (d. h. Länge) eines Eies. In der Darstellung ist das Zubereitungsgut 2 mittels eines Haltemittels 5 gehalten, nämlich hier der Hand des Nutzers. Die Finger der Hand berühren das Ei an zwei gegenüberliegenden Umfangsbereichen 6, welche in dem gezeigten Fall die Höhe des Zubereitungsgutes 2 charakterisieren. Dabei zeigen die Finger der Hand senkrecht auf die Oberfläche des Touchscreens 4, sodass der Abstand der Finger auf dem Touchscreen 4 der Höhe des Zubereitungsgutes 2 entspricht.

Fig. 3 zeigt eine alternative Ausführungsform, bei welcher während des Ermittelns einer Dimension des Zubereitungsgutes 2 eine separate Halteeinrichtung 7 mit zwei Haltebereichen 8 zur Anwendung kommt. Die Halteeinrichtung 7 ist nach der Art eines handgeführten Stativs ausgebildet, zwischen dessen beiden Haltebereichen 8 das Zubereitungsgut 2 eingeklemmt ist. Die freien Enden der Haltebereiche 8 drücken senkrecht auf die Ebene des Touchscreens 4, sodass der Abstand der verstellbaren Haltebereiche 8 und damit auch der Abstand der Berührungsbereiche auf dem Touchscreen 4 der Höhe des Zubereitungsgutes 2 entspricht.

Die Erfindung gemäß den beiden gezeigten Ausführungsbeispielen erfolgt nun beispielsweise so, dass der Nutzer der Küchenmaschine 1 über das Touchscreen 4 zunächst eine Datenbank mit zur Verfügung stehenden Rezepten durchsucht und ein gewünschtes Rezept durch Berühren des Touchscreens 4 auswählt. Das Rezept besteht aus einer Mehrzahl von Zubereitungsschritten, welche in der Abfolge zu einer gewünschten Zubereitung der beteiligten Zubereitungsgüter 2 führen. In dem hier gezeigten Beispiel umfasst das Rezept den Zubereitungsschritt des Eierkochens. Das Rezept wird nun zunächst automatisch oder halbautomatisch abgearbeitet, bis der Zubereitungsschritt "Ei kochen" erreicht ist. Da die zum Kochen des Eies verwendeten Zubereitungsparameter stark von dem Volumen des Zubereitungsgutes 2 abhängen, ist die Ermittlung der Dimension des Zubereitungsgutes 2 vorteilhaft, bevor der Zubereitungsschritt gestartet wird. Zur Ermittlung der Dimension des Eies hält der Nutzer dieses zwischen zwei Fingern seiner Hand, welche hier als Haltemittel 5 dient. Beispielsweise kann das Zubereitungsgut 2 dabei mittels Daumen und Zeigefinger gehalten werden, nämlich so, dass die Finger zwei gegenüberliegende Umfangsbereiche 6 des Eies berühren, nämlich hier die beiden Spitzen des Eies. Der Nutzer führt seine Hand an das Touchscreen 4 heran und streckt seine Finger so, dass die Fingerspitzen das Touchscreen 4 im Abstand der Höhe (Länge) des Eies berühren. Der Verfahrensschritt "Ermittlung der Dimension" kann dabei entweder manuell durch Betätigung eines Schalters der Küchenmaschine 1 durch den Nutzer ausgelöst werden, oder automatisch, sobald innerhalb der Abarbeitung des Rezeptes der Zubereitungsschritt "Ei kochen" ansteht und das Touchscreen 4 eine entsprechende Berührung des Haltemittels 5, d.h. hier der Hand des Nutzers, feststellt.

Das Touchscreen 4 ist mit einer Auswerteeinrichtung der Küchenmaschine 1 verbunden und so eingerichtet, dass der Abstand zwischen den Berührungspunkten auf dem Touchscreen 4, welche durch die Finger des Nutzers verursacht sind, berechnet wird. Anschließend wird der berechnete Abstand mit Daten verglichen, welche innerhalb einer Datenbank gespeichert sind. Diese Datenbank kann entweder auf der Küchenmaschine 1 gespeichert sein, oder auf einem externen Gerät wie beispielsweise auch einem Server, auf welchen die Küchenmaschine 1 zugreifen kann. Aufgrund des aktuellen Verfahrensschritts "Ei kochen" ist es bekannt, dass es sich bei dem Zubereitungsgut 2 um ein Ei handelt. In der Datenbank ist zu dem Zubereitungsgut 2 "Ei" eine Vielzahl von möglichen Dimensionen mit einer Vielzahl von Zubereitungsparametern verknüpft. Beispielsweise kann einem Zubereitungsgut 2 mit der Dimension 4 cm eine Zubereitungszeit von 3 Minuten zugeordnet sein, während einem Zubereitungsgut 2 mit einer Dimension von 5 cm eine Zubereitungszeit von 4 Minuten zugeordnet ist. Die Auswerteeinrichtung vergleicht die ermittelte Dimension des Zubereitungsgutes 2 somit mit verschiedenen Referenzdimensionen und wählt bei Übereinstimmung der Dimensionen den entsprechenden Zubereitungsparameter, hier eine bestimmte Kochzeit, aus. In Abhängigkeit von dem Zubereitungsparameter wird eine Zubereitungsanweisung für die Küchenmaschine 1 generiert und der Nutzer aufgefordert, das Zubereitungsgut 2 in das Zubereitungsgefäß 3 zu legen (ggf. zuvor mit Ergänzung von Wasser innerhalb des Zubereitungsgefäßes 3). Anschließend bestätigt der Nutzer beispielsweise, dass er das Zubereitungsgut 2 in das Zubereitungsgefäß 3 gelegt hat, woraufhin der Zubereitungsschritt "Ei kochen" automatisch gestartet wird.

Das Ausführungsbeispiel gemäß Fig. 3 kann ähnlich zu der Verfahrensführung gemäß Fig. 2 erfolgen, wobei hier jedoch das Zubereitungsgut 2 mittels der Halteeinrichtung 7 gegen das Touchscreen 4 gedrückt wird. Die beiden Haltebereiche 8 der Halteeinrichtung 7 klemmen das Zubereitungsgut 2 zwischen sich ein, und zwar vorzugsweise so, dass der Abstand zwischen den Haltebereichen 8 gleichzeitig der Länge des Zubereitungsgutes 2 entspricht. Das Touchscreen 4 ist so ausgebildet, dass dieses auf Berührung durch die Haltebereiche 8 der Halteeinrichtung 7 reagiert, sodass die Dimension des Zubereitungsgutes 2 wie gemäß Fig. 2 ermittelt werden kann.

Obwohl dies hier in den Figuren nicht dargestellt ist, kann das Haltemittel 5 bzw. die Halteeinrichtung 7 auch in Verbindung mit einem Touchscreen 4 eines externen Gerätes, wie beispielsweise eines Tablet-Computers zur Anwendung kommen. Das externe Gerät steht dabei in Datenkommunikationsverbindung mit der Küchenmaschine 1, sodass die ermittelte Dimension des gegen das Touchscreen 4 gehaltenen Zubereitungsgutes 2 zur weiteren Verfahrensführung an die Küchenmaschine 1 übermittelt werden kann.

### Liste der Bezugszeichen

- 1: Küchenmaschine
- 2: Zubereitungsgut
- 3: Zubereitungsgefäß
- 4: Touchscreen
- 5: Haltemittel
- 6: Umfangsbereich
- 7: Halteeinrichtung
- 8: Haltebereich
- 9: Drehschalter

## Patentansprüche

1. Verfahren zum Zubereiten eines Zubereitungsgutes (2) mittels einer elektrisch betriebenen Küchenmaschine (1), wobei ein Nutzer der Küchenmaschine (1) ein Zubereitungsgut (2) in ein Zubereitungsgefäß (3) der Küchenmaschine (1) einbringt und Zubereitungsanweisungen über ein Touchscreen (4) an eine Steuereinrichtung der Küchenmaschine (1) übermittelt, und wobei die Küchenmaschine (1) in Abhängigkeit von den Zubereitungsanweisungen automatisch einen Zubereitungsschritt und/oder eine Einstellung von Zubereitungsparametern für die Zubereitung des Zubereitungsgutes (2) durchführt, **dadurch gekennzeichnet, dass** der Nutzer das Zubereitungsgut (2) vor dem Einbringen in das Zubereitungsgefäß (3) mittels eines Haltemittels (5) so vor das Touchscreen (4) hält, dass das Haltemittel (5) zumindest einen Teilbereich des Touchscreens (4) berührt, wobei eine Dimension des gehaltenen Zubereitungsgutes (2) anhand der Position des berührten Teilbereiches auf dem Touchscreen (4) ermittelt wird.

2. Verfahren nach Anspruch 1, **dadurch gekennzeichnet, dass** anhand der ermittelten Dimension ein Volumen des Zubereitungsgutes (2) ermittelt wird.

3. Verfahren nach Anspruch 1 oder 2, **dadurch gekennzeichnet, dass** die ermittelte Dimension mit in einer Datenbank gespeicherten Daten für verschiedene Zubereitungsgüter (2) verglichen wird und ein für die Dimension des Zubereitungsgutes (2) hinterlegter Zubereitungsparameter der Küchenmaschine (1) eingestellt wird.

4. Verfahren nach einem der vorhergehenden Ansprüche, **dadurch gekennzeichnet, dass** als Zubereitungsparameter eine Zubereitungszeit und/oder eine Zubereitungstemperatur eingestellt wird.

5. Verfahren nach einem der vorhergehenden Ansprüche, **dadurch gekennzeichnet, dass** der Nutzer das Zubereitungsgut (2) mittels seiner Hand vor das Touchscreen (4) hält, wobei das Touchscreen (4) während der Ermittlung der Dimension des Zubereitungsgutes (2) von mindestens einem Finger, bevorzugt von zwei oder drei Fingern, des Nutzers berührt wird.

6. Verfahren nach Anspruch 5, **dadurch gekennzeichnet, dass** der Nutzer den das Zubereitungsgut (2) haltenden Finger im Wesentlichen parallel zu einer Flächennormale des Touchscreens (4) ausrichtet und gegen das Touchscreen (4) drückt.

7. Verfahren nach einem der vorhergehenden Ansprüche, **dadurch gekennzeichnet, dass** der Nutzer das Zubereitungsgut (2) an zumindest zwei gegenüberliegenden Umfangsbereichen (6) des Zubereitungsgutes (2) hält.

8. Verfahren nach einem der Ansprüche 1 bis 4, **dadurch gekennzeichnet, dass** das Zubereitungsgut (2) mittels einer handgeführten Halteeinrichtung (7) gehalten wird, wobei ein eine Dimension des Zubereitungsgutes (2) anzeigender Haltebereich (8) der Halteeinrichtung (7) parallel zu einer Flächennormale des Touchscreens (4) ausgerichtet und gegen das Touchscreen (4) gedrückt wird.

9. Verfahren nach einem der vorhergehenden Ansprüche, **dadurch gekennzeichnet, dass** die Ermittlung der Dimension des Zubereitungsgutes (2) an einem Touchscreen (4) der Küchenmaschine (1) oder an einem Touchscreen (4) eines in Kommunikationsverbindung mit der Küchenmaschine (1) stehenden Mobilgerätes erfolgt.

10. Elektrisch betriebene Küchenmaschine (1), insbesondere Kochmixgerät, mit einem Zubereitungsgefäß (3) zur Aufnahme von Zubereitungsgut (2) und mit einem Touchscreen (4), **dadurch gekennzeichnet, dass** die Küchenmaschine (1) zur Durchführung eines Verfahrens nach einem der vorhergehenden Ansprüche ausgebildet ist.
